# EUROPEAN PATENT APPLICATION

(11) **EP 2 434 577 A1**
(43) Date of publication of application: **28.03.2012**
(21) Application number: 10290506.4
(22) Date of filing: 24.09.2010
(51) Int. Cl.: H01Q 1/24, H01Q 1/28, H01Q 21/08, H01Q 21/22, H04B 7/185

(54) **Antenna arrangement for direct air-to-ground communication**

(71) Applicant: Alcatel Lucent, 75007 Paris (FR)
(72) Inventor: Bitzer, Thomas, 73614 Schorndorf (DE); Matz, Ralf, 71566 Althutte (DE); Bestard-Bennasar, Antoni, 70178 Stuttgart (DE); Ohm, Michael, 70372 Stuttgart (DE)
(74) Representative: Kohler Schmid Möbus

(57) **Abstract**

The invention relates to an antenna arrangement (1) for providing direct air-to-ground communications, comprising: an antenna array (2) with a plurality of antenna elements (A1 to An), preferably in a linear configuration, and a feeding network (3) with a plurality of antenna paths (P1 to Pn) for feeding an RF signal (RF in) to the plurality of antenna elements (A1 to An), wherein the feeding network (3) is adapted to generate phase shifts (α₁ to αₙ) and possibly also unequal amplitudes (r₁ to rₙ) on the antenna paths (P1 to Pn) such that the antenna array (2) provides an approximated target gain pattern , in particular an approximate cosecant squared gain pattern, in the elevation plane for a range of elevation angles from an elevation limit angle with maximum gain up to an elevation angle of 90°. The invention also relates to a base station (BS) and to a radio network (RN) comprising such an antenna arrangement (1), as well as to a corresponding method for providing direct air-to-ground communications

## Description

### Field of the Invention

The invention relates to the field of telecommunications, and, more specifically, to methods and devices for providing direct air-to-ground communications.

### Background

This section introduces aspects that may be helpful in facilitating a better understanding of the invention. Accordingly, the statements of this section are to be read in this light and are not to be understood as admissions about what is in the prior art or what is not in the prior art.

Usually, mobile telecommunication networks are dedicated to serve ground-based mobile stations and thus the cell size / area of radio coverage of a cell is in the range of a few kilometers. Such cells can be covered best by using base station antennas with a narrow beam width, i.e. a narrow 3 dB angle in the vertical (elevation) plane. In order to reduce inter-cell interference, these antennas are operated with a certain down-tilt.

However, the situation is different for direct-air-to-ground (DA2G) applications, i.e. for base stations serving airborne mobile stations (on airplanes etc.). Due to the high speed of the airborne mobile stations, cell sizes provided for DA2G applications have to be much larger than cell sizes for terrestrial mobile stations in order to avoid permanent hand-over processes. The target radius is in the range of about 100 km. With conventional base station antennas, such an area cannot be-covered in the best way, as the vertical 3 dB beam width typically used is too narrow: If the main lobe is directed towards the cell edge, the gain in the direction of higher elevation angles (up to the zenith) would be insufficient. As a result, it is likely that a plane flying close over an area where a base station is located will receive a signal from this base station which is so weak that an unwanted handover to a neighbor cell may take place. Such unwanted handovers could cause the loss of the link, due to too high timing differences of the signals. This problem cannot even be avoided by a certain "up-tilt of the antenna elements.

Therefore, an antenna arrangement had to be found that provides a sufficient gain at low elevation angles but also provides higher gain (than existing base station antennas do) at higher elevation angles.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

One aspect of the invention is implemented in an antenna arrangement for providing direct air-to-ground communications, comprising: an antenna array with a plurality of antenna elements, preferably in a linear configuration, and a feeding network with a plurality of antenna paths for feeding an RF signal to the plurality of antenna elements, wherein the feeding network is adapted to generate phase shifts on the antenna paths such that the antenna array provides an approximated target gain pattern, in particular an approximated cosecant squared gain pattern, in the elevation (vertical) plane for a range of elevation angles from an elevation limit angle with maximum gain up to an elevation angle of 90°.

The disadvantage of existing base station antennas / antenna arrays has been explained above. For the deployment in terrestrial cells, which requires a narrow 3 dB angle in the vertical plane, the phase shift between two neighboring antenna elements is constant for all antenna elements and the amplitude of the RF signal fed to each antenna element is also constant over all antenna elements.

The inventors propose to generate phase shifts between the antenna elements for approximating a target gain pattern for a range of angles from the elevation limit angle up to the zenith which increases the gain of the antenna arrangement as compared to an antenna arrangement with constant phase shift between all of the antenna elements. The elevation limit angle is defined as the direction of maximum propagation in the elevation plane.

Typically, a cosecant squared function provides a reasonably good description of the desired behaviour for elevation angles from the elevation limit angle to the zenith. The cosecant squared gain pattern allows one to achieve a constant link for a specific flight altitude within the complete airborne cell.

Although aperture antennas for radar applications are known which allow to approach a cosecant squared pattern, these aperture antennas are designed for a different frequency range and thus, It would be necessary to develop specific aperture antennas for the targeted direct-air-to-ground applications in radio networks at RF frequencies in the GHz range, e.g. at about 2.1 GHz. This would be very cost-intensive and is thus not a preferred solution.

The inventors now propose to generate phase shifts in the antenna paths to the antenna elements which are chosen to approximate a target gain pattern, in particular a cosecant squared gain pattern, with an antenna array adapted to generate signals with RF frequencies, as usual in cells of radio networks for terrestrial applications. The phase shifts required for generating such a pattern may be derived using an optimization algorithm (based on numerical simulations).

It should be noted, however, that the ideal target gain pattern (also for elevation angles below the elevation limit angle) is not unequivocally defined, as it depends on several parameters (cell size, air-traffic distribution on the cell, carrier frequency, inter-cell interference mitigation methods...) and optimization criteria (e.g. how much antenna gain is required at elevation angle 90° for a specific scenario and system constraints).

In one embodiment, the feeding network is adapted to generate unequal amplitudes on the antenna paths for improving the approximation of the target gain pattern in the elevation plane. In addition to the generation of phase shifts, the amplitude (respectively, the power) provided to the antenna elements may be distributed in an unequal manner for improving the approximation of the target behaviour.

In this case, both optimized phase and amplitude values are derived by numerical simulations of the radiation pattern in the elevation plane. The required amplitude and phase shift values for each antenna element can be derived by mathematical optimization, taking into account the number of antenna elements and their single radiation patterns, in order to achieve an optimal approximation to the ideal behavior.

In a further embodiment, the antenna array is installed with an up-tilt angle. Typically, all antenna elements of the antenna array are Installed in a linear, vertically stacked configuration, typically spaced at mutual distances of about half the transmission wavelength. For providing sufficient gain also at high elevation angles close to the zenith (elevation angle of 90°), it is proposed to install the antenna array with an up-tilt angle, i.e. inclining the antenna array with respect to the horizontal plane.

In another embodiment, the feeding network is adapted to generate phase shifts and preferably also unequal amplitudes on the antenna paths such that the antenna array provides an increasing gain for a range of elevation angles from 0° up to the elevation limit angle, wherein a difference between a gain at the elevation angle of 0° and the maximum gain at the elevation limit angle is preferably at least 20 dB.

For the direct-air-to-ground applications described herein, the target antenna pattern for elevation angles below the elevation limit angle should present a rapid antenna gain increase towards the maximum antenna gain at the elevation limit angle (direction of maximum propagation) starting from a very low gain at elevation 0° (horizon).

The objective of the target pattern shape at elevation angles below the elevation limit angle is to reduce the inter-cell interference as much as possible (due to the large cell sizes, signals from/to aircrafts connected to other sites reach/leave the considered base station antenna with a very low elevation angle), but at the same time to provide an acceptable antenna gain for the served users which are located at the cell-edge (at low elevations).

In one embodiment, the feeding network comprises at least one phase shifter for providing a phase shift on at least one of the antenna paths. The phase shifter may be deployed as an additional length of the antenna path which generates a desired delay / phase shift of the RF signal provided to the antenna element.

In another embodiment, the feeding network comprises at least one unequal power divider for providing unequal amplitudes on at least two of the antenna paths. The unequal power divider is used to generate a desired amplitude ratio of the RF signal at its outputs which differs from an equal distribution (i.e. 50 % : 50 % for a power divider having two outputs). By an appropriate selection of the amplitude ratios of a plurality of power dividers, each antenna element of the antenna array can be provided with a desired fraction of the total available transmit power.

A further aspect of the invention is realized in a base station for providing direct air-to-ground communications in a radio communications network, the base station comprising at least one antenna array of the type described above. As indicated above, the antenna array allows to provide a gain pattern in the elevation plane which is optimized for direct air-to-ground applications, allowing to provide sufficient gain also at large elevation angles (close to the zenith), thus avoiding undesired handovers to neighbor cells.

In one embodiment, the base station is adapted to provide an area of radio coverage (cell radius) of more than 20 km, preferably of more than 40 km, more preferably of more than 80 km. Large cell sizes / areas of radio coverage are desired for direct air-to-ground applications in order to avoid frequent handover events to neighbor cells. Typically, the elevation limit angle is chosen in dependence of the area of radio coverage of the cell, cells with a larger area of radio coverage having a lower elevation limit angle.

A further aspect of the invention relates to a radio network comprising at least one base station of the type described above. The radio network may e.g. be deployed in accordance with the LTE standard, the transmitter equipment of the base station being adapted to provide sufficient transmit power to provide a large area of radio coverage of several tens of kilometers.

A further aspect is implemented in a method for providing direct air-to-ground communications, comprising: feeding an RF signal via a plurality of antenna paths to a plurality of antenna elements of an antenna array, and selecting phase shifts on the antenna paths which provide an approximated target gain pattern, in particular an approximated cosecant squared gain pattern, in the elevation plane of the antenna array for a range of elevation angles from an elevation limit angle with maximum gain up to an elevation angle of 90°.

It is possible to optimize only the phase shift of each antenna element, while the amplitude provided to each antenna element remains the same. This is advantageous for antenna configurations in which a desired level of approximation can be reached without additional adjustments of the amplitude. In this way, conventional (equal) power dividers may be used in the feeding network.

In one variant, the method further comprises: generating unequal amplitudes on the antenna paths for improving the approximation of the target gain pattern in the elevation plane. If a desired level of approximation of the cosecant squared gain pattern cannot be attained by providing only a phase shift, an additional amplitude adjustment may be performed to improve the approximation.

In another variant, the phase shifts and preferably also the unequal amplitudes are selected such that the antenna array provides an increasing gain for a range of elevation angles from 0° to the elevation limit angle, wherein a difference between a gain at the elevation angle of 0° and the maximum gain at the elevation limit angle is preferably at least 20 dB. As indicated above, a target gain pattern with a steadily (and rapidly) increasing gain for low elevation angles up to the elevation limit angle is desirable.

In yet another variant, the antenna array is part of a cell of a radio communications network, and the elevation limit angle is selected in dependence of an area of radio coverage of the cell. As a general rule, the larger the cell size, the lower the elevation limit angle.

In another variant, the area of radio coverage of the cell is chosen to be more than 20 km, preferably more than 40 km, more preferably more than 80 km. As indicated above, a large area of radio coverage should be chosen for direct air-to-ground applications in order to avoid frequent handover events.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Figures

Exemplary embodiments are shown in the diagrammatic drawing and are explained in the description below. The following are shown:
- **Fig. 1**: shows a schematic diagram of an embodiment of an antenna arrangement according to the invention having a feeding network and an antenna array,
- **Fig. 2**: shows three radiation gain patterns in the elevation plane having a cosecant squared behaviour for high elevation angles, and
- **Fig. 3**: shows a flow-chart for obtaining optimized phase shift and amplitude values for the antenna arrangement of Fig. 1.

### Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

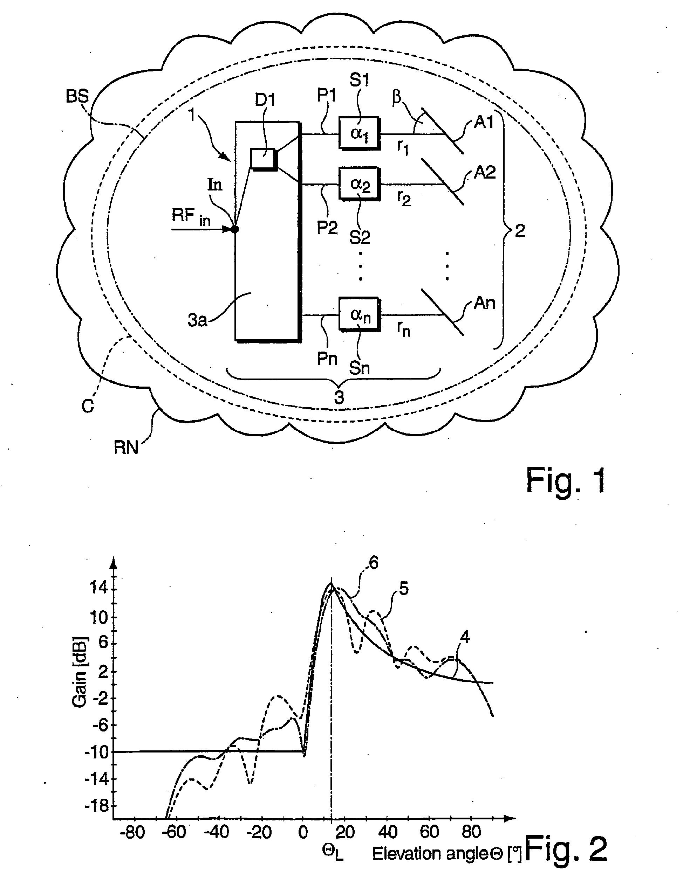

**Fig. 1** shows an antenna arrangement 1 for providing direct air-to-ground communications with airborne vehicles (e.g. airplanes). The antenna arrangement 1 is part of a base station BS which generates an RF signal "RF in" for over-the-air transmissions to the airplanes using the antenna arrangement 1. For this purpose, the base station BS comprises a plurality of components (baseband part, up-mixers, amplifiers etc.) which are known to those skilled in the art and will therefore not be described herein. The base station BS generates an area of radio coverage, also referred to as a cell C, in the form of a three-dimensional radiation pattern which can be characterized by radiation patterns in the vertical (elevation) plane (for different elevation angles) and in the horizontal plane (for different azimuth angles). The cell C is part of a radio network RN, in the present example in compliance with the LTE standard, the radio network RN comprising a plurality of further cells (not shown) to which handovers are performed when an air-based vehicle leaves the area of radio coverage of the cell C. The cell size (radius) of the cell C for direct air-to-ground communications is typically in the range of several tens of kilometers to several hundred kilometers in order to avoid frequent handover events.

The antenna arrangement 1 comprises an antenna array 2 with a plurality of antenna elements A1 to An in a linear, vertically stacked configuration. The antenna arrangement 1 also has a feeding network 3 for feeding the RF signal "RF in" from an input port "In" of the feeding network 3 to a respective antenna element A1 to An via corresponding antenna paths P1 to Pn. Each antenna path P1 to Pn has a phase shifter S1 to Sn for generating a desired phase shift of the RF signal "RF in" on the corresponding antenna path A1 to An.

The feeding network 3 also comprises a distribution network 3a which has a plurality of power dividers, only one of which (power divider D1) is shown in Fig. 1 for the sake of simplicity. In the example of Fig. 1, the power divider D1 is an unequal power divider which allows to distribute the incoming transmission power of the RF signal "RF in" to the first and to the second antenna path P1, P2 with a power ratio which may be chosen unequal, i.e. different from a ratio of 0.5.

The antenna elements A1 to An of the antenna array 2 are of identical construction and are all installed with the same mechanical up-tilt angle β which is chosen to be 20° in the present example (i.e. the entire antenna array 2 is inclined by an angle of 20° with respect to the horizontal plane). The up-tilt is provided in order to achieve sufficient gain towards an elevation angle Θ of 90°, i.e. directly above the base station BS.

The antenna arrangement 1 of Fig. 1 allows to generate an individual phase shift α₁ to αₙ for each antenna element A1 to An using the phase shifters S1 to Sn as well as generating a desired, individual amplitude r₁ to rₙ for each antenna element A1 to An using the unequal power dividers (D1 etc.). A target elevation radiation pattern of the antenna arrangement 1 can be approximated by suitably selecting the phase shifts α₁ to αₙ and possibly also the amplitudes r₁ to rₙ. The definition of the target elevation pattern is based on system-level investigations which lead to base station antenna patterns suitable for direct air-to-ground system requirements.

One example of such a target elevation pattern 4 is shown in **Fig. 2****,** representing the gain of the antenna arrangement 1 in dependence of the elevation angle (in °) in a logarithmic scale (dB), for an elevation limit angle Θ_{L} = 15° (maximum gain). In the present example, the target gain pattern 4 has a cosecant squared dependence on the elevation angle Θ for a range of elevation angles starting from the elevation limit angle Θ_{L}= 15° with maximum gain up to an elevation angle of 90°. From an elevation angle of Θ= 0°, the gain constantly increases up to the maximum gain at the elevation limit angle Θ_{L}.

In the following, it will be explained how optimized values for the phase shifts α₁ to αₙ can be found in order to obtain an approximation curve 5 of the target elevation gain pattern 4. Moreover, it will be clarified how a combination of optimized phase shifts α₁ to αₙ and optimized (unequal) amplitudes r₁ to rₙ can be derived to arrive at a further, improved approximation curve 6 of the target gain pattern 4.

Those skilled in the art will appreciate that only the elevation plane of the antenna arrangement 1 is relevant for the performed optimization (e.g. the optimization is limited to a weight function of the vertical column of n antenna elements shown in Fig. 1). In contrast thereto, the azimuth pattern is independent of the used weight function and, in general, will present a conventional tri-sector (120°) pattern.

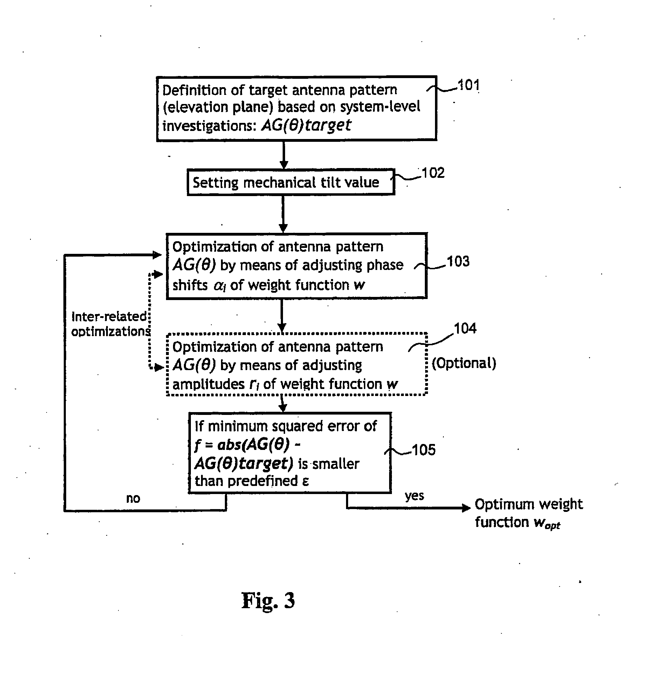

The optimized amplitude and phase shift values for each antenna element (weight function) are derived by a mathematical numerical simulation, as explained in the following with reference to the flow-chart of **Fig. 3****:**
In a first step 101, the target antenna radiation pattern AG(Θ)*target* is defined, in the present case corresponding to the gain curve 4 shown in Fig. 2.

In a second step 102, the mechanical up-tilt β of the antenna elements A1 to An is set. As indicated above, this tilt is provided in order to achieve sufficient gain towards 90° elevation angle (directly above the base station). A suitable up-tilt value β depends on the radiation pattern of each individual (patch) antenna element A1 to An, on the target pattern AG(Θ)*target*, and possibly on the area of radio coverage of the base station BS.

There are two main optimization possibilities: Either only the phase shifts α₁ to αₙ (in the following: αᵢ, i = 1 to n) of each antenna element A1 to An are optimized, while the amplitude provided to all antenna elements A1 to An is kept identical. Alternatively, both the phase shifts αᵢ, and the amplitudes r₁ to rₙ (in the following: rᵢ, i = 1 to n) provided to the antenna elements A1 to An are optimized simultaneously.

In the first case, a numerical iterative process is used to optimize the phase shift values αᵢ, in a further step 103. In the second case the amplitude values rᵢ for each antenna element A1 to An are simultaneously optimized in a further step 104 represented in Fig. 3. As is also indicated in Fig. 3, the optimization process runs until the deviation (e.g. measured in the form of a minimum square error, MSE) between the antenna pattern AG(Θ) generated with the weight function of steps 103 (and possibly step 104) and the target antenna pattern AG(Θ)*target* is smaller than a pre-defined value ε. If the deviation is smaller than the pre-defined value ε, the desired optimum weight function wₒₚₜ, i.e. optimized phase shift values αᵢ, and (possibly) the optimized amplitude values rᵢ have been found and the optimization is terminated.

For an antenna array 2 with eight antenna elements A1 to A8, the optimized antenna weights wₒₚₜ (weight function wₒₚₜ = [w1,w2,...,w8] starting from the uppermost antenna element) for a mechanical up-tilt of β = 20° which have been obtained in the way described above for a target gain AG(Θ)*target* which corresponds to the gain curve 4 of Fig. 2 will be given below for two cases A and B:
Case A: only phase shift αᵢ optimization (equal amplitudes r*ᵢ*), corresponding to the first approximation curve 5 shown in Fig. 2:
   αᵢ=[185.5°, 226.4°, 226.2°, 274.7°, 120.0°,194.1°,48.9°,153.2°]
Case B: Weight function with phase-shift αᵢ and amplitude rᵢ optimization (corresponding to the second, improved approximation curve 6 shown in Fig. 2):
   αᵢ [67.3°, 152.9°, 92.0°, 133.1°, 175.7°, 95.7°, 41.2°, 36.2°]
   rᵢ = [21.4%, 45.5%, 2.0%, 19.1%, 0.5%, 8.8%, 0.2%, 2.4%]

The optimized amplitudes rᵢ for each antenna element A1 to An are given as a percentage of the overall RF input power with which each antenna element A1 to An should be fed.

As can be seen from the approximation curves of Fig. 2, a target radiation pattern 4 for direct-air-to-ground applications with the goal to provide a telecommunications link at high data rates between a terrestrial radio network, e.g. in compliance with the 3GPP LTE standard, and airplanes, can be approximated in the way described above. The proposed solution is based on existing base station antenna arrays 2 having antenna elements A1 to An which are already optimized for the target frequency (typically GHz) range.

As indicated above, this solution can be implemented easily by exchanging the splitter network of existing base station antenna arrangements and replacing it by a splitter network comprising e.g. directional couplers that provide the (different) amplitudes rᵢ for each antenna element A1 to An. The non-constant phase shift values αᵢ can be implemented by phase shifter elements S1 to Sn that are set to the required phase shift values. Although typically the amplitudes rᵢ and the phase shift values αᵢ are static values which are set when manufacturing the antenna arrangement 1, it may also be possible to use variable phase shifters and possibly variable unequal power dividers for modifying the approximation of the target gain pattern during operation of the antenna arrangement e.g. depending on a (varying) air-traffic distribution on the cell or other parameters. For this purpose, a control unit (not shown) may be installed in the base station BS.

As an additional implementation option, the antenna pattern AG(Θ) may be optimized by means of suitably selecting amplitudes rᵢ, phase shifts αᵢ, as well as the additional up-tilt angle β also based on the size of the cell C. In this respect, it should be noted that different cell sizes (with cell radius of tens or few hundreds kilometers) can be used for direct-air-to-ground applications. The cell size determines the distribution of the elevation angle Θ of the users / airplanes (e.g. smaller cell sizes lead to a larger concentration of users with higher elevation angles Θ) and, therefore, the optimal (target) antenna pattern AG(Θ)*target*, and in particular the elevation limit angle Θ_{L} of the target antenna pattern AG(Θ) also depends on the size of the cell C.

In summary, in the way described above, an easy and cost-effective implementation of a base station antenna arrangement with an optimized radiation pattern for direct-air-to-ground applications can be provided.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Antenna arrangement (1) for providing direct air-to-ground communications, comprising:
an antenna array (2) with a plurality of antenna elements (A1 to An), preferably in a linear configuration, and
a feeding network (3) with a plurality of antenna paths (P1 to Pn) for feeding an RF signal (RF in) to the plurality of antenna elements (A1 to An), wherein
the feeding network (3) is adapted to generate phase shifts (α₁ to αₙ) on the antenna paths (P1 to Pn) such that the antenna array (2) provides an approximated target gain pattern, in particular an approximated cosecant squared gain pattern (5, 6), in the elevation plane for a range of elevation angles (Θ) from an elevation limit angle (Θ_{L}) with maximum gain up to an elevation angle (Θ) of 90°.

2. Antenna arrangement according to claim 1, wherein the feeding network (3) is adapted to generate unequal amplitudes (r₁ to rₙ) on the antenna paths (P1 to Pn) for improving the approximation of the target gain pattern (4) in the elevation plane.

3. Antenna arrangement according to claim 1 or 2, wherein the antenna array (2) is installed with an up-tilt angle (β).

4. Antenna arrangement according to any one of the preceding claims,
wherein the feeding network (3) is adapted to generate phase shifts (α₁ to αₙ) and preferably also unequal amplitudes (r₁ to rₙ) on the antenna paths (P1 to Pn) such that the antenna array (2) provides an increasing gain for a range of elevation angles (Θ) from 0° up to the elevation limit angle (Θ_{L}), wherein a difference between a gain at the elevation angle of 0° and the maximum gain at the elevation limit angle (Θ_{L} is preferably at least 20 dB.

5. Antenna arrangement according to any one of the preceding claims,
wherein the feeding network (3) comprises at least one phase shifter (S1 to Sn) for providing a phase shift (α₁ to αₙ) on at least one of the antenna paths (P1 to Pn).

6. Antenna arrangement according to any one of claims 2 to 5, wherein the feeding network (3) comprises at least one unequal power divider (D1) for providing unequal amplitudes (r₁, r₂) on at least two of the antenna paths (P1, P2).

7. Base station (BS) for providing direct air-to-ground communications in a radio communications network (RN), the base station (BS) comprising at least one antenna array (1) according to any one of the preceding claims.

8. Base station according to claim 7, adapted to provide an area of radio coverage of more than 20 km, preferably of more than 40 km, more preferably of more than 80 km.

9. Radio communications network (RN) comprising at least one base station (BS) according to claim 7 or 8.

10. Method for providing direct air-to-ground communications, comprising:
feeding an RF signal (RF in) via a plurality of antenna paths (P1 to Pn) to a plurality of antenna elements (A1 to An) of an antenna array (2), and selecting phase shifts (α₁ to αₙ) on the antenna paths (P1 to Pn) which provide an approximated target gain pattern, in particular an approximated cosecant squared gain pattern (5, 6), in the elevation plane of the antenna array (2) for a range of elevation angles (Θ) from an elevation limit angle (Θ_{L}) with maximum gain up to an elevation angle (Θ) of 90°.

11. Method according to claim 10, further comprising:
generating unequal amplitudes (r₁ to rₙ) on the antenna paths (P1 to Pn) for improving the approximation of the target gain pattern (4) in the elevation plane.

12. Method according to claim 10 or 11, wherein the phase shifts (α₁ to αₙ) and preferably also the unequal amplitudes (r₁ to rₙ) are selected so that the antenna array (2) provides an increasing gain for a range of elevation angles (Θ) from 0° to the elevation limit-angle (Θ_{L}), wherein a difference between a gain at the elevation angle of 0° and the maximum gain at the elevation limit angle (Θ_{L}) is preferably at least 20 dB.

13. Method according to any one of claims 10 to 12, wherein the antenna array (2) is part of a cell (C) of a radio communication network (RN), and wherein the elevation limit angle (Θ_{L}) is selected in dependence of an area of radio coverage of the cell (C).

14. Method according to any one of claims 10 to 13, wherein the area of radio coverage of the cell (C) is chosen to be more than 20 km, preferably more that 40 km, more preferably more than 80 km.

## Amended claims

### Amended claims in accordance with Rule 137(2) EPC.

**1.** Antenna arrangement (1) for providing direct air-to-ground communications, comprising:
an antenna array (2) with a plurality of antenna elements (A1 to An),
preferably in a linear configuration, and
a feeding network (3) with a plurality of antenna paths (P1 to Pn) for feeding an RF signal (RF in) to the plurality of antenna elements (A1 to An), wherein
the feeding network (3) is adapted to generate phase shifts (α₁ to αₙ) on the antenna paths (P1 to Pn) such that the antenna array (2) provides an approximated target gain pattern, in particular an approximated cosecant squared gain pattern (5, 6), in the elevation plane for a range of elevation angles (Θ) from an elevation limit angle (Θ_{L}) with maximum gain up to an elevation angle (Θ) of 90°, wherein the feeding network (3) is adapted to generate phase shifts (α₁ to αₙ) and preferably also unequal amplitudes (r₁ to rₙ) on the antenna paths (P1 to Pn) such that the antenna array (2) provides an increasing gain for a range of elevation angles (Θ) from 0° up to the elevation limit angle (Θ_{L}),
**characterized in that**
a difference between a gain at the elevation angle of 0° and the maximum gain at the elevation limit angle (Θ_{L}) is at least 20 dB.

**2.** Antenna arrangement according to claim 1, wherein the feeding network (3) is adapted to generate unequal amplitudes (r₁ to rₙ) on the antenna paths (P1 to Pn) for improving the approximation of the target gain pattern (4) in the elevation plane.

**3.** Antenna arrangement according to claim 1 or 2, wherein the antenna array (2) is installed with an up-tilt angle (β).

**4.** Antenna arrangement according to any one of the preceding claims,
wherein the feeding network (3) comprises at least one phase shifter (S1 to Sn) for providing a phase shift (α₁ to αₙ) on at least one of the antenna paths (P1 to Pn).

**5.** Antenna arrangement according to any one of claims 2 to 4, wherein the feeding network (3) comprises at least one unequal power divider (D1) for providing unequal amplitudes (r₁, r₂) on at least two of the antenna paths (P1, P2).

**6.** Base station (BS) for providing direct air-to-ground communications, the base station (BS) comprising at least one antenna array (1) according to any one of the preceding claims.

**7.** Base station according to claim 6, adapted to provide an area of radio coverage of more than 20 km, preferably of more than 40 km, more preferably of more than 80 km.

**8.** Radio communications network (RN) comprising at least one base station (BS) according to claim 6 or 7.

**9.** Method for providing direct air-to-ground communications, comprising:
feeding an RF signal (RF in) via a plurality of antenna paths (P1 to Pn) to a plurality of antenna elements (A1 to An) of an antenna array (2), and
selecting phase shifts (α₁ to αₙ) on the antenna paths (P1 to Pn) which provide an approximated target gain pattern, in particular an approximated cosecant squared gain pattern (5, 6), in the elevation plane of the antenna array (2) for a range of elevation angles (Θ) from an elevation limit angle (Θ_{L}) with maximum gain up to an elevation angle
(Θ) of 90°, wherein the phase shifts (α₁ to αₙ) and preferably also the unequal amplitudes (r₁ to rₙ) are selected so that the antenna array (2) provides an increasing gain for a range of elevation angles (Θ) from 0° to the elevation limit angle (Θ_{L}),
**characterized in that**
a difference between a gain at the elevation angle of 0° and the maximum gain at the elevation limit angle (Θ_{L} is at least 20 dB.

**10.** Method according to claim 9, further comprising:
generating unequal amplitudes (r₁ to rₙ) on the antenna paths (P1 to Pn) for improving the approximation of the target gain pattern (4) in the elevation plane.

**11.** Method according to any one of claims 9 or 10, wherein the antenna array (2) is part of a cell (C) of a radio communication network (RN), and wherein the elevation limit angle (Θ_{L} is selected in dependence of an area of radio coverage of the cell (C).

**12.** Method according to any one of claims 9 to 11, wherein the area of radio coverage of the cell (C) is chosen to be more than 20 km, preferably more than 40 km, more preferably more than 80 km.
